# EUROPEAN PATENT SPECIFICATION

(11) **EP 3 159 245 B1**
(45) Date of publication and mention of the grant of the patent: **28.08.2019**
(21) Application number: 15190988.4
(22) Date of filing: 22.10.2015
(51) Int. Cl.: B62D 25/02, B62D 29/00

(54) **RIGID STRUCTURE COMPRISING A TWO-PART LOCAL REINFORCING ELEMENT**
STARRE STRUKTUR MIT ZWEITEILIGEM LOKALEN VERSTÄRKUNGSELEMENT
STRUCTURE RENFORCEE AVEC UN ELEMENT EN DEUX PARTIES

(43) Date of publication of application: 26.04.2017
(73) Proprietor: Constellium Singen GmbH, 78224 Singen (DE)
(72) Inventor: REBSTOCK, Thomas, D-78247 HILZINGEN (DE); RIETSCHLE, Dirk, D-78247 HILZINGEN (DE)
(74) Representative: Constellium - Propriété Industrielle

(56) References cited:
- EP-A1- 2 336 007
- DE-A1- 2 951 662
- JP-A- H06 286 646
- JP-A- 2001 354 157
- JP-A- 2010 105 587
- US-A- 1 045 984
- US-A- 3 390 862
- US-A1- 2006 022 180
- US-A1- 2007 217 885
- US-B1- 6 308 972
- US-B1- 7 328 879

## Description

### TECHNICAL FIELD

The field of the invention is that of the local reinforcement of a rigid structure, such as an extruded profile, comprising a space delimited by two opposite walls, between which an attached reinforcing element is interposed. The invention relates in particular to a hollow profile that delimits a longitudinal chamber in which the reinforcing element is inserted, and is optionally passed through by an assembly member.

### PRIOR ART

The problem of reinforcing a rigid structure is found in various industries, for example the motor vehicle and aeronautical industries, which increasingly use profiles inasmuch as they can afford a good compromise between the requirements of lightness and rigidity. However, it may be necessary to locally reinforce them.

Document US2005/0077752 describes an example of a rigid structure integrated into a door of a motor vehicle in order to increase the rigidity thereof in the event of an impact. The rigid structure is in this case a hollow profile of which the walls delimit a hollow longitudinal chamber. In order to prevent the walls from collapsing into the chamber in the event of an impact, an attached reinforcing element can be inserted into the latter. The reinforcing element is in this case a moulded block made of metal or wood.

Document FR2990187 describes another example of a rigid structure comprising a local reinforcing element. The rigid structure is in this case an I-beam formed of two opposite flanges that are connected together by a web, incorporating a reinforcing element in the form of a section of tube disposed in contact with the flanges, so as to absorb compressive loads. US6308972 discloses a suspension assembly for a motor vehicle. A locking mechanism is disclosed for rigidly securing a shank segment of an end link within the hollow end of the stabilizer bar. DE 2951662 discloses a wedge assembly for securing a forcing die to the ram pf a drop forging press. It comprises a wedge and counter-wedge which are clamped together by a tensioning screw with springs. US 2007/0217885 discloses a reusable anchor that permits to securely attach one structure to another structure and then later release and disconnect the two structures. US 1 04 5984 relates to improvements in wedge mechansims and particularly to expansible wedge mechanisms, the structure being such that the wedge device construction is capable of automatically expanding to fill spaces or crowd tightly against articles or materials that are to firmly held in place.

However, the insertion and positioning of the reinforcing element in a predetermined region of the space or of the chamber formed by the rigid structure can prove to be particularly difficult inasmuch as the dimensioning of the reinforcing element is generally provided such that its bearing surfaces naturally come into contact with the walls of the rigid structure. Therefore, on account of the uncertainties associated with the dimensioning of the chamber and the reinforcing element, the positioning of the latter can cause friction at the interfaces, complicating its installation.

There is thus a need to locally reinforce a rigid structure by way of a localized reinforcing element in a predetermined region of the structure, the insertion and then the positioning of which in the desired zone can be carried out in an easy and precise manner, while subsequently ensuring satisfactory contact between the walls of the rigid structure and the reinforcing element for good absorption of mechanical loads.

### SUMMARY OF THE INVENTION

The aim of the invention is to provide a simple, economical and effective solution to these problems, making it possible to avoid the abovementioned drawbacks at least in part.

To this end, the subject of the invention is a rigid structure comprising at least one space delimited in part by two mutually opposite walls referred to as the lower wall and upper wall, wherein at least one reinforcing element is interposed between the walls, characterized in that the reinforcing element is formed of two separate parts, each of said parts, referred to as reinforcing parts, comprising: a bearing surface facing one of the walls, and a contact surface at which the two parts are in mutual contact, the contact surfaces being inclined with respect to the bearing surfaces such that when the reinforcing parts are brought closer together by sliding along the contact surfaces, this causes them to move relative to one another in the direction of the walls, so as to ensure that the bearing surfaces come into contact with the walls.

Preferred but non-limiting aspects of this rigid structure are the following:
The reinforcing element may be fixed to the rigid structure.

Said space may furthermore be delimited in part by two mutually opposite walls referred to as side walls which each connect the lower wall and upper wall so as to define a hollow chamber in which the reinforcing element is situated, the latter comprising two mutually opposite flanks that are respectively disposed in a manner facing said side walls.

The spacing between the two opposite flanks may be substantially equal to the distance between the two side walls.

Each reinforcing part may comprise at least one wall referred to as a vertical wall extending substantially orthogonally to the bearing surface, comprising an edge opposite the bearing surface that forms the inclined surface, and preferably comprises two vertical walls that are located at opposite edges of the bearing surface.

The rigid structure may comprise at least one through-orifice disposed in a side wall connecting the lower wall and upper wall and delimiting in part said space, and opening onto a surface of one of the vertical walls of the reinforcing element, in which a fixing means, fixing at least one of the reinforcing parts to the side wall, is situated.

The lower wall and upper wall and the bearing surfaces may be mutually parallel.

Each contact surface may be inclined with respect to the corresponding bearing surface at an inclination angle of between 10° and 40°.

The lower wall may comprises a first through-orifice, the bearing surface facing the latter comprising a through-orifice that is substantially aligned with the first orifice, and preferably wherein the lower wall and upper wall and the bearing surfaces each comprise a through-orifice, said through-orifices being more or less aligned with one another.

The lower wall and upper wall may form part of an extruded profile made of aluminium.

The invention also relates to a method for the local reinforcement of a rigid structure comprising a space delimited by two mutually opposite walls referred to as the lower wall and upper wall, by means of a reinforcing element formed of separate parts, each part, referred to as a reinforcing part, comprising a bearing surface intended to come into contact with one of the walls, and a contact surface at which the two parts are intended to be in mutual contact, the contact surfaces being inclined with respect to the bearing surfaces, wherein:
i) a first reinforcing part is introduced and positioned between said walls in a predetermined region of said space; and then
ii) the second reinforcing part is positioned with respect to the first reinforcing part such that said reinforcing parts can be brought closer together by sliding along the contact surfaces, thereby causing the parts to move relative to one another in the direction of the walls until the bearing surfaces are in contact with the walls.

During step ii), the first reinforcing part may be prevented from moving in translation with respect to the walls.

Following step ii), the second reinforcing part may be fixed with respect to the walls.

The lower wall and the bearing surface of the first reinforcing part may comprise lower through-orifices that are aligned with one another. During step ii), an assembly member may be at least partially introduced into the space through said lower orifices so as to prevent the first reinforcing part from moving in translation with respect to the walls.

The upper wall and the bearing surface of the second reinforcing part may comprise upper through-orifices that are aligned with one another and with lower orifices. During or following step ii), said assembly member may be introduced into the space through said lower and upper orifices.

The invention also relates to a reinforcing element intended to locally reinforce a rigid structure comprising a space, able to receive the reinforcing element, delimited in part by two walls referred to as the lower wall and upper wall, said reinforcing element being formed of two separate parts
- each of said parts, referred to as reinforcing parts, comprising:
   ∘ a bearing surface intended to face one of the walls, and
   ∘ a contact surface at which the two parts are intended to be in mutual contact,
- the contact surfaces being inclined with respect to the bearing surfaces and the dimension of the reinforcing parts between the bearing surface and the contact surface being designed such that when the reinforcing parts are brought closer together by sliding along the contact surfaces, this causes the bearing surfaces to move away from one another, until the spacing between the bearing surfaces is substantially equal to that between the lower wall and upper wall.

### BRIEF DESCRIPTION OF THE DRAWINGS

Further aspects, aims, advantages and features of the invention will become more clearly apparent from reading the following detailed description of preferred embodiments thereof, which are given by way of non-limiting example, and with reference to the appended drawings, in which:
Figure 1a is a schematic perspective view of a rigid structure comprising a reinforcing element according to the state of the art; and Figure 1b is a detail view of the reinforcing element shown in Figure 1a;
Figures 2a and 2b are schematic views in longitudinal section of a rigid structure comprising a reinforcing element in which the upper reinforcing part is not in contact (Figure 2a) or is in contact (Figure 2b) with the upper wall;
Figure 3a is a schematic perspective view of a rigid structure according to a preferred embodiment of the invention comprising a reinforcing element according to another embodiment of the invention, in which orifices allow the insertion of an assembly member; and Figure 3b is a detailed view of the reinforcing element shown in Figure 3a.

### DETAILED DESCRIPTION OF PARTICULAR EMBODIMENTS

In the figures and the rest of the description, the same references represent identical or similar elements. In addition, the various elements are not shown to scale in order to make the figures clearer.

The invention relates to a rigid structure comprising a space, for example a chamber, delimited in part by two mutually opposite walls, referred to as the lower wall and upper wall. A reinforcing element is disposed in the chamber in a manner interposed between the two walls, so as to ensure localized reinforcement of a given region of the rigid structure.

The invention is described more particularly here in the case in which the rigid structure forms an extruded profile that extends along a longitudinal axis, the walls of which delimit a hollow chamber.

A three-dimensional orthonormal reference plane (X, Y, Z) is defined here and for the remainder of the description, where the axis X is oriented along a longitudinal axis of the chamber, where the transverse axis Z, referred to as the vertical axis, is oriented orthogonally to the lower wall and upper wall, and where the transverse axis Y is orthogonal to the axes X and Z. The terms "top/bottom", "upper/lower" are defined along the axis Z which does not necessarily refer to a vertical orientation. In addition, the terms "internal/external" are defined in accordance with the orientation of a surface in the direction of the space formed between the two, upper and lower, walls. Finally, a height is a distance between two surfaces that is measured along the vertical axis Z, and a width is a distance measured between two surfaces along the transverse axis Y.

Local reinforcement means the reinforcement of the rigid structure only in a given region that is likely to be subjected to vertical loads, in particular tensile or compressive loads, or in a region that is likely to have a concentration of mechanical stresses brought about for example by the presence of a through-opening. Vertical loads means loads applied to the rigid structure that are oriented along an axis substantially orthogonal to the lower wall and upper wall. The local reinforcement may be temporary or permanent. It is temporary when the reinforcing element is not fixed irreversibly to the profile, but fitted thereto in a removable manner.

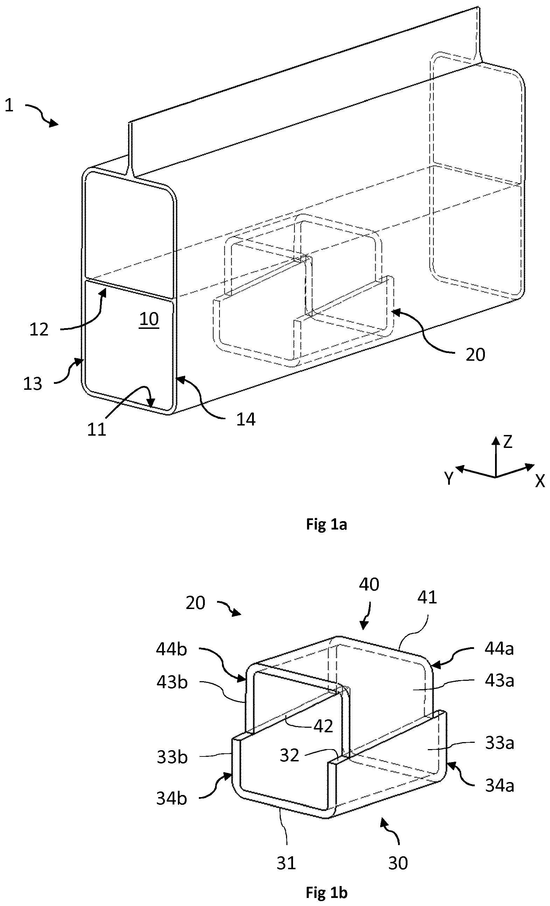

Figure 1a is a schematic perspective view of a rigid structure 1 according to the state of the art, comprising a local reinforcing element 20. Figure 1b is a schematic perspective view of the reinforcing element shown in Figure 1a.

The rigid structure 1 is in this case a profile comprising a mutually opposite upper wall 12 and lower wall 11 that delimit in part a space 10 or hollow chamber. The walls 11, 12 are in this case planar and extend along a longitudinal axis X.

In this example, two side walls 13, 14 connect the upper wall 12 and lower wall 11 together so as to delimit a chamber 10 which extends longitudinally along the longitudinal axis X and has a transverse profile, along the plane (Y, Z), with a closed section. The height of the chamber 10 is in this case the distance along the vertical axis Z between the internal surface of the two lower and upper walls 11, 12, and the width of the chamber 10 is the distance along the transverse axis Y between the internal surfaces of the two side walls 13, 14.

Furthermore, the different opposite walls are parallel in pairs, such that the chamber 10 has a height and a width that are substantially constant along the longitudinal axis X. Alternatively, it is possible for the different walls not to be mutually parallel such that the height and/or the width of the chamber vary along the longitudinal axis X. The hollow profile in this case comprises two chambers that are superposed on one another.

One reinforcing element 20 is disposed in a given region of the chamber 10 and is interposed between the two lower and upper walls 11, 12 so as to ensure localized reinforcement of the rigid structure 1.

The reinforcing element 20 is formed of two parts 30, 40, referred to as reinforcing parts, that are separate from one another and designed to engage with one another in order to ensure the localized reinforcement of the rigid structure 1. Each reinforcing part 30, 40 comprises a bearing surface 31, 41 and a contact surface 32, 42. The bearing surfaces 31, 41 face the lower wall 11 and upper wall 12, respectively, and are intended to be in contact with these walls. They are opposite one another and are designed so as to be approximately parallel to the lower wall 11 and upper wall 12. The contact surfaces 32, 42 are oriented towards one another and are intended to be in mutual contact. As can be seen in Figures 1a and 1b, the two reinforcing parts 30, 40 are mutually arranged so as to be in contact with one another at the contact surfaces 32, 42 on one side and so as to be in contact with the lower wall 11 and upper wall 12 at the bearing surfaces 31, 41.

Furthermore, the contact surfaces 32, 42 are inclined with respect to the bearing surfaces 31, 41, and thus with respect to the upper wall 12 and lower wall 11, such that when the reinforcing parts 30, 40 are brought closer together by sliding along the contact surfaces 32, 42, this causes said parts to move in the direction of said walls 11, 12, so as to ensure that contact is made between the bearing surfaces 31, 41 and the walls 11, 12. The contact surfaces 32, 42 are thus shaped so as to allow the two reinforcing parts to slide, or glide, with respect to one another. The two reinforcing parts 30, 40 are thus able to slide one against the other along the contact surfaces 32, 42 when a movement force along the longitudinal axis X is applied to one and/or the other reinforcing part. When this movement force is applied in the direction bringing the reinforcing parts 30, 40 closer together, a vertical relative movement of the reinforcing parts 30, 40 is brought about by the wedge effect, which allows the bearing surfaces 31, 41 to come into contact with the lower and upper walls 11, 12.

The rigid structure 1 can be a hollow profile produced by extrusion, machining, form pressing or some other similar technique. It may be produced from a metal material, such as aluminium and its alloys, or of a composite material based on fibres and a possibly organic matrix. The reinforcing element 20 can be produced from a sheet shaped by stamping or embossing, or by extrusion, machining, etc. The reinforcing element is preferably made of a metal material, for example aluminium or one of its alloys.

Thus, the rigid structure 1 comprises a reinforcing element 20 disposed in a given region of a space or hollow chamber 10. The reinforcing element 20 is designed to ensure the local reinforcement of the rigid structure 1 by bringing the bearing surfaces 31, 41 into contact with the lower wall 11 and upper wall 12 of the rigid structure. It is thus capable of absorbing loads, notably vertical and in particular compressive loads, that are applied to the rigid structure. It is also capable of distributing mechanical stresses better in the case in which the reinforced region is liable to have a concentration of stresses.

The reinforcing element 20 is an inserted part, introduced into a given region of the space 10 in the rigid structure 1 after the step of producing the latter. Thus, as a result of the absence of a reinforcing element 20 produced in one piece with the lower wall 11 and/or upper wall 12, the method for producing the rigid structure 1 has not been modified and the rigid structure exhibits a good compromise between the requirements for lightness and rigidity. In addition, since the reinforcing element 20 is an inserted part, the reinforcement can be permanent or temporary, depending on whether the reinforcing element is subsequently fixed or not fixed irreversibly to the rigid structure.

Furthermore, since the reinforcement element is formed of two parts that engage with one another in order to ensure contact with the lower wall and upper wall, the step of installing in the desired region of the chamber of the rigid structure is simplified and facilitated.

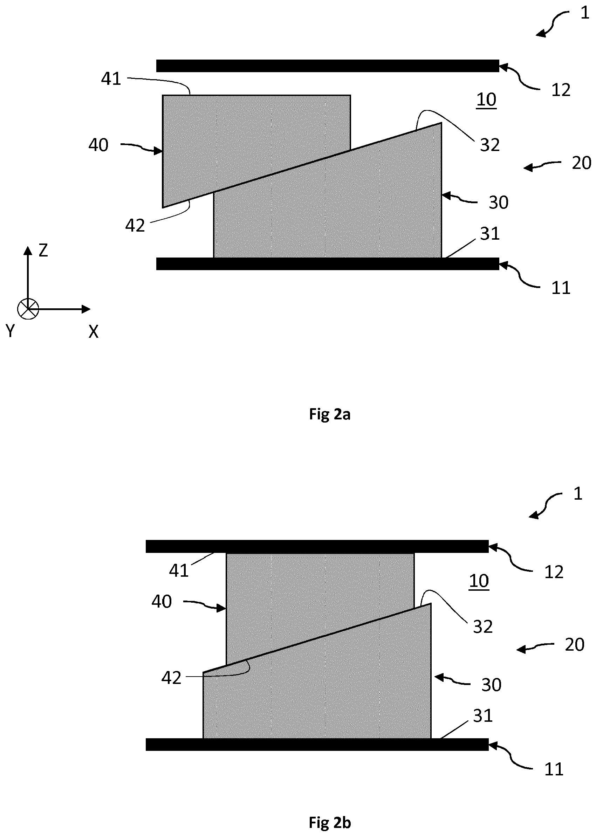

Specifically, as illustrated in Figures 2a and 2b, the installing of the reinforcing element 20 in the given region of the chamber 10 is advantageously carried out in two stages:

In a first stage (Figure 2a), a first reinforcing part 30, in this case the lower part, is introduced into and positioned in a given region of the chamber 10 of the rigid structure. The lower reinforcing part 30 is advantageously disposed such that its bearing surface 31 is in contact with the lower wall 11.

The second reinforcing part 40, in this case the upper part, can be introduced at the same time or after the positioning of the lower part 30. However, the two reinforcing parts 30, 40 are positioned relative to one another, or at a spacing apart from one another, such that the two bearing surfaces 31, 41 are not in contact with the lower wall 11 and upper wall 12, respectively. The reinforcing element 20 thus has a height, defined as the distance between the two bearing surfaces 31, 41 along the vertical axis Z, less than the height of the chamber. The introduction of the reinforcing element 20 into the chamber 10 and its positioning in the given region are thus facilitated compared with the prior-art examples mentioned above.

In a second stage (Figure 2b), the upper reinforcing part 40 is positioned with respect to the lower part 30 such that the two parts are brought closer together by sliding along these contact surfaces 32, 42, thereby causing the relative movement of the bearing surfaces 31, 41 so as to ensure contact of the latter with the upper wall 12 and lower wall 11. Thus, the reinforcing element 20 has a height substantially the same as that of the chamber 10.

During this positioning step, it is advantageous for the first reinforcing part 30 to be prevented from moving in translation with respect to the lower wall 11, so that only the second reinforcing part 40 is moved. The proper positioning of the reinforcing element in the given region is thus simplified.

As illustrated in Figure 1a, the space 10 in the rigid structure can be a hollow chamber delimited in part by two mutually opposite side walls 13, 14 which connect the lower wall 11 and upper wall 12 at their edge. The chamber 10 is thus a space which extends along the longitudinal axis X and which has a closed section in the plane (Y, Z). The chamber thus has a defined width defined by the spacing between the internal surfaces of the two side walls 13, 14.

Advantageously, as illustrated in Figures 1a and 1b, the reinforcing element 20 comprises two mutually opposite flanks 33a, 33b, 43a, 43b, or lateral surfaces, that are each disposed facing a side wall 13, 14 of the rigid structure. The spacing between the flanks 33a, 33b, 43a, 43b, which in this case defines the width of the reinforcing element 20, is substantially the same as the width of the chamber 10, and so the reinforcing element is prevented from moving in translation along the transverse axis Y. Thus, the reinforcing element is able to move in translation along the longitudinal axis X when a movement force is applied thereto by a user, and is prevented from moving in translation along the transverse axis Y.

Advantageously, as illustrated in Figures 1a and 1b, each reinforcing part 30, 40 comprises at least one wall, referred to as a vertical wall, that is oriented substantially orthogonally to the bearing surface 31, 41. It extends from a wall, referred to as a horizontal wall, the external surface of which forms the bearing surface. The vertical wall comprises an edge opposite the bearing surface forming the inclined contact surface. In this example, two vertical walls 34a, 34b, 44a, 44b are disposed at the edge of the bearing surface 31, 41, and have the same dimensions. The reinforcing parts 30, 40 are in mutual contact at the edges of vertical walls. Furthermore, the flanks 33a, 33b, 43a, 43b of the reinforcing element are formed by the external surface of the vertical walls 34a, 34b, 44a, 44b that is oriented towards the side walls 13, 14 of the rigid structure. The reinforcing element thus has a hollow tube shape, oriented along the longitudinal axis X, the section of which is formed by the vertical walls and the horizontal walls of each reinforcing part.

In order to keep the reinforcing parts 30, 40 fixed in terms of movement with respect to the upper wall 12 and lower wall 11 of the rigid structure, the roughness state of the inclined contact surfaces 32, 42 between the two reinforcing parts and also the inclination angle can be such that the engagement of the second reinforcing part 40 in contact with both the first reinforcing part 30 and the upper wall 12 is not reversible, in other words the friction between the various parts of the reinforcing element 20 and the upper wall 12 and lower wall 11 can be sufficient to keep the reinforcing element in contact with the lower wall and upper wall. Thus, each part of the reinforcing element is kept fixed in terms of movement along the longitudinal axis X with respect to the lower wall and upper wall by frictional forces. The inclination angle of each contact surface 32, 42 with respect to the corresponding bearing surface 31, 41 is advantageously between 10° and 40°.

However, according to the invention, it may be advantageous to add at least one means for fixing one and/or the other reinforcing part with respect to the rigid structure.

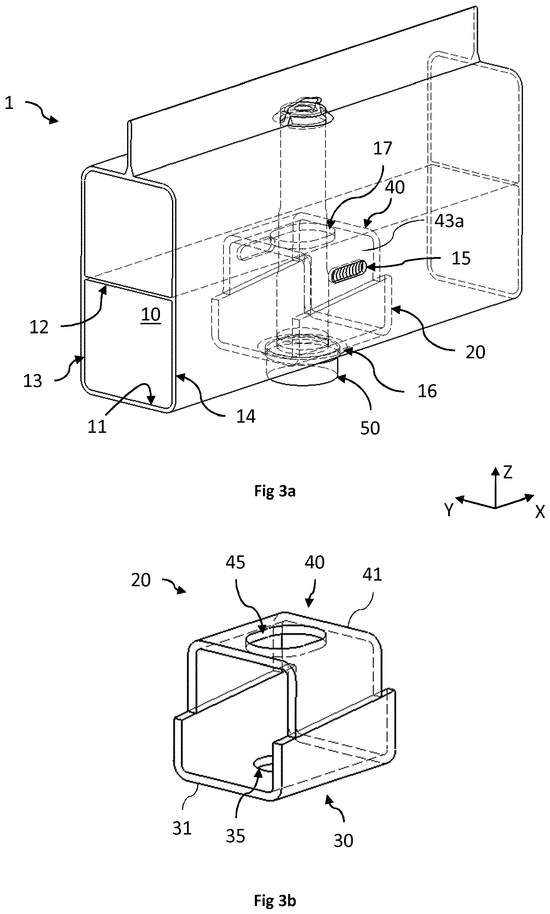

As illustrated in Figure 3a at least one through-orifice 15, referred to as a fixing orifice, can be provided in one of the walls 14 of the rigid structure, and disposed so as to open out at an external surface of one of the reinforcing parts. In this example, a fixing orifice 15 is disposed in the side wall 14 which opens onto the flank 43a of the second reinforcing part 40. A fixing means is then disposed at the fixing orifice 15 so as to prevent the second part 40 from moving with respect to the profile 1. It may be a welding material or adhesive bonding material, or even a fixing member of the rivet or nut and screw type, or any other equivalent means.

In an alternative and possibly complementary manner, a second fixing orifice can also be provided so as to open out at a flank of the second reinforcing part, and a fixing means, identical or similar to the one described above, can be disposed at the second fixing orifice so as to prevent the reinforcing part in question from moving with respect to the rigid structure.

As illustrated in Figures 3a and 3b, one of the lower wall 11 or upper wall 12 can comprise a through-opening, or orifice, that allows the introduction of an external member 50, for example an assembly member designed to assemble the rigid structure on an adjacent structure. Thus, the bearing surface of the reinforcing part facing the concerned wall also comprises an orifice, allowing the introduction of the assembly member. In the example in Figure 3a, the lower wall 11 and the bearing surface 31 of the lower reinforcing part 30 are each provided with an orifice 16, 35 referred to as lower orifice, said lower orifices 16, 35 being aligned with one another, such that an assembly rod or bushing 50 is in this case introduced into the lower orifices 16, 35.

Advantageously, the dimension of the orifice 35 along the longitudinal axis X is substantially the same as that of the assembly rod 50. Thus, when the latter is introduced into said lower orifices 16, 35, the lower reinforcing part 30 is prevented from moving in translation along the longitudinal axis X by the assembly rod 50. It is also advantageous for the dimensions of the orifice 16 in the lower wall 11 and that 35 in the lower reinforcing part 30 to be substantially the same as the dimensions of the assembly rod 50, so as to ensure substantially continuous contact between the peripheral surface of the assembly rod 50 and the peripheral surface of the lower orifices 16, 35, thereby affording good transmission of loads and distribution of stresses.

Furthermore, the upper wall 12 and the bearing surface 42 of the upper reinforcing part 40 are also each provided with an orifice 17; 45 referred to as upper orifice, said upper orifices 17, 45 being aligned with the lower orifices 16, 35. Thus, the assembly rod 50 can be introduced into the chamber 10, passing through the lower and upper orifices 16, 35, 17, 45. The dimensions of the orifice 17 in the upperwall 12 can also be substantially the same as the dimensions of the assembly rod 50, so as to ensure substantially continuous contact between the rod and the upper wall.

Preferably, the orifice 45 in the upper part 40 has a dimension along the longitudinal axis X that is greater than the dimension of the rod 50, when the latter is engaged in the chamber. Thus, when the reinforcing element 20 is installed, the assembly rod 50 can help to prevent the lower reinforcing part 30 from moving in translation without preventing the reinforcing parts 30, 40 from being brought closer together. Thus, the installation of the reinforcing element can be carried out in the following manner:

In a first stage, the lower reinforcing part 30 is introduced into and positioned in the predetermined region of the chamber 10. More specifically, the bearing surface 31 is in contact with the lower wall 11, and the lower orifices 16, 35 are substantially aligned.

The upper reinforcing part 40 is also introduced, and is moved towards the lower part 30 by sliding along the inclined contact surfaces 32, 42, until all of the lower and upper orifices 16, 35, 17, 45 are aligned.

The assembly rod 50 is then introduced such that it passes through these lower and upper orifices 16, 35, 17, 45. In this step, the lower reinforcing part 30 is prevented from moving in translation along the longitudinal axis X by the assembly rod 50, but the upper reinforcing part 40 can be moved along the axis X on account of the position of the orifice 45 and the greater dimension thereof along the axis X than that of the rod 50.

Finally, the upper reinforcing part 40 and the lower reinforcing part 30 are brought closer together by sliding relative to one another along the inclined contact surfaces 32, 42, until contact is made between the bearing surfaces 31, 41 and the lower wall 11 and upper wall 12.

The fixing of the upper reinforcing part 40 in translation along the longitudinal axis X can be ensured by a fixing means (weld, adhesive or the like), disposed in the fixing orifice 15 that is situated on the side wall 14 and opens onto the flank 43a of the upper reinforcing part.

Thus, in this example, the lower reinforcing part 30 is prevented from moving in translation along the longitudinal axis X by the assembly rod 50; along the transverse axis Y by the side walls 13, 14 of the rigid structure 1; and along the transverse axis Z by the upper reinforcing part 40. The upper reinforcing part 40 is also prevented from moving in translation along the axes Y and Z in an identical manner to the lower part 30, and along the longitudinal axis X by the fixing means (and also by frictional forces at the interfaces between the various surfaces of the mechanical parts).

Particular embodiments have just been described. Different variants and modifications will be apparent to a person skilled in the art.

As mentioned above, the rigid structure can be an I-beam having two mutually opposite flanges that are connected together by a web extending substantially orthogonally to the flanges. The reinforcing element is thus interposed between the two flanges.

Furthermore, the reinforcing element according to the preferred embodiment has a hollow tube shape extending along the longitudinal axis of the chamber. In a variant, each reinforcing part may be a solid part delimited by the bearing surface, the inclined contact surface and two flanks. The reinforcing part may then have the overall shape of a truncated parallelepiped that is to say that the contact surface is inclined with respect to the bearing surface.

## Claims

1. Rigid structure (1) comprising at least one space (10) delimited in part by two mutually opposite walls referred to as the lower wall (11) and upper wall (12) and two mutually opposite walls referred to as side walls (13, 14) which each connects the lower wall (11) and upper wall (12) so as to define a hollow chamber (10), wherein at least one reinforcing element (20) is interposed between the walls (11, 12), the reinforcing element (20) is formed of two separate parts (30, 40),
- each of said parts (30; 40), referred to as reinforcing parts, comprising:
- a bearing surface (31; 41) facing one of the walls (11; 12),
- a contact surface (32; 42) at which the two parts (30, 40) are in mutual contact,
- at least one wall referred to as a vertical wall (34a; 44a) extending substantially orthogonally to the bearing surface (31; 41), comprising an edge opposite the bearing surface (31; 41) that forms the inclined surface (32; 42)
- the contact surfaces (32, 42) being inclined with respect to the bearing surfaces (31, 41) such that when the reinforcing parts (30, 40) are brought closer together by sliding along the contact surfaces (32, 42), this causes them to move relative to one another in the direction of the walls (11, 12), so as to ensure that the bearing surfaces (31, 41) come into contact with the walls (11, 12) said rigid structure being **characterized in that**
it comprises at least one through-orifice (15) disposed in a side wall (14) connecting the lower wall (11) and upper wall (12) and delimiting in part said space (10), and opening onto a surface (43a) of one of the vertical walls (44a) of the reinforcing element (20), in which a fixing means, fixing at least one of the reinforcing parts (30, 40) to the side wall (14), is situated.

2. Rigid structure (1) according to claim 1, wherein each reinforcing parts (30, 40) comprises two vertical walls (34a, 34b; 44A, 44b) that are located at opposite edges of the bearing surface (31; 41).

3. Rigid structure (1) according to claims 1 or 2, wherein the lower wall (11) and upper wall (12) and the bearing surfaces (31, 41) are mutually parallel.

4. Rigid structure (1) according to any one of claims 1 to 3, wherein each contact surface (32; 42) is inclined with respect to the corresponding bearing surface (31; 41) at an inclination angle of between 10° and 40°.

5. Rigid structure (1) according to any one of claims 1 to 4, wherein the lower wall (11) comprises a first through-orifice (16), the bearing surface (31) facing the latter comprising a through-orifice (35) that is substantially aligned with the first orifice (16), and preferably wherein the lower wall (11) and upper wall (12) and the bearing surfaces (31, 41) each comprise a through-orifice (16, 17, 35, 45), said through-orifices (16, 17, 35, 45) being more or less aligned with one another, an assembly member (50) is introduced into the lower orifices (16, 35).

6. Rigid structure (1) according to any one of claims 1 to 5, wherein the lower wall (11) and upper wall (12) form part of an extruded profile made of aluminium.

7. Method for the local reinforcement of a rigid structure (1) comprising a space (10) delimited by two mutually opposite walls referred to as the lower wall (11) and upper wall (12), by means of a reinforcing element (20) formed of separate parts (30, 40), each part, referred to as a reinforcing part, comprising a bearing surface (31, 41) intended to come into contact with one of the walls (11, 12), and a contact surface (32, 42) at which the two parts (30, 40) are intended to be in mutual contact, the contact surfaces (32, 42) being inclined with respect to the bearing surfaces (31, 41), wherein:
i) a first reinforcing part (30) is introduced and positioned between said walls (11, 12) in a predetermined region of said space; and then
ii) the second reinforcing part (40) is positioned with respect to the first reinforcing part (30) such that said reinforcing parts (30, 40) can be brought closer together by sliding along the contact surfaces (32, 42), thereby causing the parts (30, 40) to move relative to one another in the direction of the walls (11, 12) until the bearing surfaces (31, 41) are in contact with the walls (11, 12), and then following step ii),
iii) the second reinforcing part (40) is fixed with respect to the walls (11, 12).

8. Method for local reinforcement according to claim 7, wherein, during step ii), the first reinforcing part (30) is prevented from moving in translation with respect to the walls (11, 12).

9. Method for local reinforcement according to claims 7 or 8, the lower wall (11) and the bearing surface (31) of the first reinforcing part (30) comprising lower through-orifices (16, 35) that are aligned with one another, wherein during step ii), an assembly member (50) is at least partially introduced into the space (10) through said lower orifices (16, 35) so as to prevent the first reinforcing part (30) from moving in translation with respect to the walls (11, 12).

10. Method for local reinforcement according to claim 9, the upper wall (12) and the bearing surface (31) of the second reinforcing part (40) comprising upper through-orifices (17, 45) that are aligned with one another and with lower orifices (16, 35), wherein during or following step ii), said assembly member (50) is introduced into the space (10) through said lower and upper orifices (16, 17, 35, 45).

## Patentansprüche

1. Starre Struktur (1), mindestens einen Raum (10) umfassend, der teilweise durch zwei sich gegenüberliegende Wände eingegrenzt wird, die als untere Wand (11) und obere Wand (12) bezeichnet werden, und zwei sich gegenüberliegende Wände, die als Seitenwände (13, 14) bezeichnet werden, von denen jede die untere Wand (11) und obere Wand (12) verbindet, um eine Hohlkammer (10) zu definieren, wobei mindestens ein Verstärkungselement (20) zwischen den Wänden (11, 12) eingesetzt ist, wobei das Verstärkungselement (20) aus zwei getrennten Teilen (30, 40) gebildet wird,
- wobei jedes der Teile (30; 40), die als Verstärkungsteile bezeichnet werden, umfasst:
- eine Gleitfläche (31; 41), die einer der Wände (11; 12) zugewandt ist,
- eine Kontaktfläche (32; 42), mit der die zwei Teile (30, 40) in gegenseitigem Kontakt stehen,
- wobei sich mindestens eine Wand, die als vertikale Wand (34a; 44a) bezeichnet wird, im Wesentlichen orthogonal zu der Gleitfläche (31; 41) erstreckt, eine Kante gegenüber der Gleitfläche (31; 41) umfassend, die die abgeschrägte Fläche (32; 42) bildet
- wobei die Kontaktflächen (32, 42) in Bezug auf die Gleitflächen (31, 41) abgeschrägt sind, sodass, wenn die Verstärkungsteile (30, 40) durch Verschieben entlang der Kontaktflächen (32, 42) näher zusammengebracht werden, bewirkt wird, dass sie sich relativ zueinander in die Richtung der Wände (11, 12) bewegen, um dafür zu sorgen, dass die Gleitflächen (31, 41) in Kontakt mit den Wänden (11, 12) kommen,
wobei die starre Struktur **dadurch gekennzeichnet ist, dass**
sie mindestens eine Durchgangsöffnung (15) umfasst, die in einer Seitenwand (14) angeordnet ist, die die untere Wand (11) und obere Wand (12) verbindet, und den Raum (10) teilweise eingrenzt, und sich auf eine Fläche (43a) von einer der vertikalen Wände (44a) des Verstärkungselements (20) öffnet, in dem ein Befestigungsmittel, das mindestens eines der Verstärkungsteile (30, 40) an der Seitenwand (14) befestigt, situiert ist.

2. Starre Struktur (1) nach Anspruch 1, wobei jedes der Verstärkungsteile (30, 40) zwei vertikale Wände (34a, 34b; 44A, 44b) umfasst, die sich an gegenüberliegenden Kanten der Gleitfläche (31; 41) befinden.

3. Starre Struktur (1) nach den Ansprüchen 1 oder 2, wobei die untere Wand (11) und obere Wand (12) und die Gleitflächen (31, 41) parallel zueinander sind.

4. Starre Struktur (1) nach einem der Ansprüche 1 bis 3, wobei jede Kontaktfläche (32; 42) in Bezug auf die entsprechende Gleitfläche (31; 41) mit einem Schrägungswinkel von zwischen 10° und 40° abgeschrägt ist.

5. Starre Struktur (1) nach einem der Ansprüche 1 bis 4, wobei die untere Wand (11) eine erste Durchgangsöffnung (16) umfasst, die Gleitfläche (31), die letzterer zugewandt ist, eine Durchgangsöffnung (35) umfasst, die im Wesentlichen zu der ersten Öffnung (16) ausgerichtet ist, und wobei die untere Wand (11) und obere Wand (12) und die Gleitflächen (31, 41) vorzugsweise jeweils eine Durchgangsöffnung (16, 17, 35, 45) umfassen, wobei die Durchgangsöffnungen (16, 17, 35, 45) mehr oder weniger zueinander ausgerichtet sind, ein Baugruppenelement (50) in die unteren Öffnungen (16, 35) eingeführt wird.

6. Starre Struktur (1) nach einem der Ansprüche 1 bis 5, wobei die untere Wand (11) und obere Wand (12) einen Teil eines Strangpressprofils bilden, das aus Aluminium gefertigt ist.

7. Verfahren zur lokalen Verstärkung einer starren Struktur (1), einen Raum (10) umfassend, der teilweise durch zwei sich gegenüberliegende Wände eingegrenzt wird, die als untere Wand (11) und obere Wand (12) bezeichnet werden, anhand eines Verstärkungselements (20), das aus zwei getrennten Teilen (30, 40) gebildet wird, wobei jedes Teil, das als Verstärkungsteil bezeichnet wird, eine Gleitfläche (31, 41) umfasst, die dazu bestimmt ist, in Kontakt mit einer der Wände (11, 12) zu kommen, und eine Kontaktfläche (32, 42), mit der die zwei Teile (30, 40) dazu bestimmt sind, in gegenseitigem Kontakt zu stehen, wobei die Kontaktflächen (32, 42) in Bezug auf die Gleitflächen (31, 41) abgeschrägt sind, wobei:
i) ein erstes Verstärkungsteil (30) in einer vorbestimmten Region des Raumes zwischen die Wände (11, 12) eingeführt und positioniert wird; und dann
ii) das zweite Verstärkungsteil (40) in Bezug auf das erste Verstärkungsteil (30) positioniert wird, sodass die Verstärkungsteile (30, 40) durch Verschieben entlang der Kontaktflächen (32, 42) näher zusammengebracht werden, wodurch bewirkt wird, dass sich die Teile (30, 40) relativ zueinander in die Richtung der Wände (11, 12) bewegen, bis die Gleitflächen (31, 41) in Kontakt mit den Wänden (11, 12) sind, und dann, nach Schritt ii),
iii) das zweite Verstärkungsteil (40) in Bezug auf die Wände (11, 12) befestigt wird.

8. Verfahren zur lokalen Verstärkung nach Anspruch 7, wobei das erste Verstärkungsteil (30) während des Schrittes ii) daran gehindert wird, sich in Bezug auf die Wände (11, 12) translatorisch zu bewegen.

9. Verfahren zur lokalen Verstärkung nach den Ansprüchen 7 oder 8, wobei die untere Wand (11) und die Gleitfläche (31) des ersten Verstärkungsteils (30) untere Durchgangsöffnungen (16, 35) umfassen, die zueinander ausgerichtet sind, wobei während des Schrittes ii) ein Baugruppenelement (50) mindestens teilweise durch die unteren Öffnungen (16, 35) in den Raum (10) eingeführt wird, um zu verhindern, dass sich das erste Verstärkungsteil (30) in Bezug auf die Wände (11, 12) translatorisch bewegt.

10. Verfahren zur lokalen Verstärkung nach Anspruch 9, wobei die obere Wand (12) und die Gleitfläche (31) des zweiten Verstärkungsteils (40) obere Durchgangsöffnungen (17, 45) umfassen, die zueinander und zu unteren Öffnungen (16, 35) ausgerichtet sind, wobei das Baugruppenelement (50) während oder nach Schritt ii) durch die unteren und oberen Öffnungen (16, 17, 35, 45) in den Raum (10) eingeführt wird.

## Revendications

1. Structure rigide (1) comprenant au moins un espace (10) délimité en partie par deux parois mutuellement opposées dénommées paroi inférieure (11) et paroi supérieure (12) et deux parois mutuellement opposées dénommées parois latérales (13, 14) qui raccordent chacune la paroi inférieure (11) et la paroi supérieure (12) de façon à définir une chambre creuse (10), dans laquelle au moins un élément de renforcement (20) est interposé entre les parois (11, 12), l'élément de renforcement (20) est formé de deux parties (30, 40) séparées,
- chacune desdites parties (30 ; 40), dénommées parties de renforcement, comprenant :
- une surface d'appui (31 ; 41) tournée vers l'une des parois (11 ; 12),
- une surface de contact (32 ; 42) au niveau de laquelle les deux parties (30, 40) sont en contact mutuel,
- au moins une paroi dénommée paroi verticale (34a ; 44a) s'étendant de façon sensiblement orthogonale à la surface d'appui (31 ; 41), comprenant un bord opposé à la surface d'appui (31 ; 41) qui forme la surface inclinée (32 ; 42)
- les surfaces de contact (32, 42) étant inclinées par rapport aux surfaces d'appui (31, 41) de sorte que lorsque les parties de renforcement (30, 40) sont rapprochées par coulissement le long des surfaces de contact (32, 42), cela les amène à se déplacer les unes par rapport aux autres dans la direction des parois (11, 12), de façon à garantir que les surfaces d'appui (31, 41) viennent en contact avec les parois (11, 12),
ladite structure rigide étant **caractérisé en ce que**
elle comprend au moins un orifice traversant (15) disposé dans une paroi latérale (14) raccordant la paroi inférieure (11) et la paroi supérieure (12) et délimitant en partie ledit espace (10), et débouchant sur une surface (43a) de l'une des parois verticales (44a) de l'élément de renforcement (20), dans lequel un moyen de fixation, fixant au moins l'une des parties de renforcement (30, 40) à la paroi latérale (14), est situé.

2. Structure rigide (1) selon la revendication 1, dans laquelle chaque partie de renforcement (30, 40) comprend deux parois verticales (34a, 34b ; 44A, 44b) qui sont situées au niveau de bords opposés de la surface d'appui (31 ; 41).

3. Structure rigide (1) selon les revendications 1 ou 2, dans laquelle la paroi inférieure (11) et la paroi supérieure (12) et les surfaces d'appui (31, 41) sont mutuellement parallèles.

4. Structure rigide (1) selon l'une quelconque des revendications 1 à 3, dans laquelle chaque surface de contact (32 ; 42) est inclinée par rapport à la surface d'appui (31 ; 41) correspondante selon un angle d'inclinaison entre 10° et 40°.

5. Structure rigide (1) selon l'une quelconque des revendications 1 à 4, dans laquelle la paroi inférieure (11) comprend un premier orifice traversant (16), la surface d'appui (31) tournée vers celle-ci comprenant un orifice traversant (35) qui est sensiblement aligné sur le premier orifice (16), et dans laquelle de préférence la paroi inférieure (11) et la paroi supérieure (12) et les surfaces d'appui (31, 41) comprennent chacune un orifice traversant (16, 17, 35, 45), lesdits orifices traversants (16, 17, 35, 45) étant plus ou moins alignés les uns sur les autres, un organe d'assemblage (50) est introduit dans les orifices inférieurs (16, 35).

6. Structure rigide (1) selon l'une quelconque des revendications 1 à 5, dans laquelle la paroi inférieure (11) et la paroi supérieure (12) font partie d'un profilé extrudé réalisé en aluminium.

7. Procédé pour le renforcement local d'une structure rigide (1) comprenant un espace (10) délimité par deux parois mutuellement opposées dénommées paroi inférieure (11) et paroi supérieure (12), au moyen d'un élément de renforcement (20) formé de parties (30, 40) séparées, chaque partie, dénommée partie de renforcement, comprenant une surface d'appui (31, 41) destinée à venir en contact avec l'une des parois (11, 12), et une surface de contact (32, 42) au niveau de laquelle les deux parties (30, 40) sont destinées à être en contact mutuel, les surfaces de contact (32, 42) étant inclinées par rapport aux surfaces d'appui (31, 41), dans lequel :
i) une première partie de renforcement (30) est introduite et positionnée entre lesdites parois (11, 12) dans une région déterminée dudit espace ; puis
ii) la seconde partie de renforcement (40) est positionnée par rapport à la première partie de renforcement (30) de sorte que lesdites parties de renforcement (30, 40) puissent être rapprochées par coulissement le long des surfaces de contact (32, 42), amenant ainsi les parties (30, 40) à se déplacer les unes par rapport aux autres dans la direction des parois (11, 12) jusqu'à ce que les surfaces d'appui (31, 41) soient en contact avec les parois (11, 12), puis suite à l'étape ii),
iii) la seconde partie de renforcement (40) est fixée par rapport aux parois (11, 12).

8. Procédé de renforcement local selon la revendication 7, dans lequel pendant l'étape ii), la première partie de renforcement (30) est empêchée de se déplacer en translation par rapport aux parois (11, 12).

9. Procédé de renforcement local selon la revendication 7 ou 8, la paroi inférieure (11) et la surface d'appui (31) de la première partie de renforcement (30) comprenant des orifices traversants inférieurs (16, 35) qui sont alignés les uns sur les autres, dans lequel pendant l'étape ii), un organe d'assemblage (50) est introduit au moins partiellement dans l'espace (10) à travers lesdits orifices inférieurs (16, 35) de façon à empêcher la première partie de renforcement (30) de se déplacer en translation par rapport aux parois (11, 12).

10. Procédé de renforcement local selon la revendication 9, la paroi supérieure (12) et la surface d'appui (31) de la seconde partie de renforcement (40) comprenant des orifices traversants supérieurs (17, 45) qui sont alignés les sur les autres et sur les orifices inférieurs (16, 35), dans lequel pendant ou suite à l'étape ii), ledit organe d'assemblage (50) est introduit dans l'espace (10) à travers lesdits orifices inférieurs et supérieurs (16, 17, 35, 45).
